# EUROPÄISCHE PATENTSCHRIFT

(11) **EP 2 199 006 B1**
(45) Veröffentlichungstag und Bekanntmachung des Hinweises auf die Patenterteilung: **12.10.2011**
(21) Anmeldenummer: 08105993.3
(22) Anmeldetag: 16.12.2008
(51) Int. Cl.: B23K 9/29

(54) **Brenner für ein Lichtbogenschweißgerät**
Burner for an arc welding device
Brûleur pour un appareil de soudure à l'arc

(43) Veröffentlichungstag der Anmeldung: 23.06.2010
(73) Patentinhaber: EWM Hightec Welding GmbH, 56271 Mündersbach (DE)
(72) Erfinder: Vetten, Adrian, 57629 Steinebach (DE)
(74) Vertreter: Cohausz & Florack

(56) Entgegenhaltungen:
- EP-A- 1 201 346
- US-A- 5 772 102
- US-A1- 2002 134 760

## Beschreibung

Die vorliegende Erfindung betrifft einen Brenner für ein Lichtbogenschweißgerät mit einem Außenrohr und einem innerhalb des Außenrohrs vorgesehenen Raum zur Aufnahme einer Elektrode.

Vorrichtungen dieser Art sind bekannt. Sie werden für unterschiedliche Schweißaufgaben eingesetzt.

Zu den Lichtbogenschweißverfahren gehören beispielsweise das Plasmaschweißen, das Wolfram-Inertgasschweißen (WIG-Schweißen) und das Metallschutzgasschweißen (MSG-Schweißen). Die letztere Gruppe von Verfahren ist mit dem Metall-Inertgasschweißen (MIG-Schweißen) und dem Metall-Aktivgasschweißen (MAG-Schweißen) in zwei grundlegende Verfahrensarten untergliederbar. MSG-Schweißverfahren zeichnen sich dadurch aus, dass der Lichtbogen zwischen einer abschmelzenden Elektrode, die gleichzeitig einen Schweißzusatz darstellt, und dem in Bearbeitung befindlichen Werkstück brennt. Beim WIG-Schweißen hingegen wird mit einer nicht abschmelzenden Elektrode gearbeitet. Die Funktion des Schutzgases beim Schweißen erstreckt sich auf die Abschirmung der Elektrode, des Lichtbogens und des Schweißbades gegen die Atmosphäre.

Gemein ist den Lichtbogenschweißverfahren, dass Hitze nicht nur am Ort der Schweißnaht anfällt, sondern auch der Brenner selbst eine Erwärmung erfährt. Mögliche Ursachen hierfür sind vielfältig. Sie können unter anderem in vom Lichtbogen ausgehender Wärmestrahlung liegen. Gleichermaßen kann auch ein durch den Schweißvorgang erhitztes Werkstück Wärme abstrahlen, die den Brenner erhitzt. Aufgrund der ohmschen Belastung der Elektrode sowie der elektrischen Zuleitung zur Elektrode kann ebenfalls Wärme abfallen.

Die Erwärmung oder Erhitzung des Brenners kann in verschiedener Weise nachteilig sein. Beispielsweise kann sie bewirken, dass der Bediener das Führen des Brenners wegen einer gesteigerten Temperatur der Teile des Brenners, mit denen er in Kontakt gerät, als unangenehm empfindet. Im schlimmsten Fall kann die Erhitzung ein Ausmaß erreichen, bei dem es dem Bediener nicht mehr möglich ist, den Brenner überhaupt in der Hand zu halten. Um eine Abkühlung zu erreichen, muss gegebenenfalls der Betrieb des Schweißgeräts zeitweilig eingestellt werden, wodurch ein wirtschaftlicher Nachteil entstehen kann. Als eine weitere Folge der Brennererhitzung ist zu sehen, dass die thermische Belastung der Brennerkomponenten deren Lebensdauer abträglich sein kann. Erhöhter Verschleiß und steigender Wartungsbedarf können hieraus resultieren.

Am Markt sind Lichtbogenschweißgeräte erhältlich, die einer Erhitzung des Brenners durch Lösungen wie Wasser- oder Gaskühlung entgegenzuwirken versuchen. Beispielsweise existieren Lösungen, die vorsehen, dass Wasser an einem Innenrohr, das zwischen Außenrohr und Elektrode vorgesehen ist, vorbeigeführt wird, um die anfallende Wärme aufzunehmen und abzutransportieren. In ähnlicher Weise wird eine Kühlung durch Verfahren angestrebt, bei denen das zur Aufnahme und Abtransport der Wärme eingesetzte Medium ein Gas ist. Es eröffnet sich die Möglichkeit, ein eventuell ohnehin für den Schweißprozess benötigtes Schutzgas zusätzlich für Kühlungszwecke einzusetzen. Eine ausreichende Zufuhr sowie eine hinreichende hohe Strömungsgeschwindigkeit des zur Kühlung eingesetzten Mediums sind dabei sicherzustellen, damit die Wärme schnell genug und konstant vom Brenner weggeleitet werden kann.

Nicht nur an Kühlmedien, sondern auch an Schutzgase, werden spezielle Anforderungen bezüglich des Strömungsverhaltens gestellt. Der Schutzgasstrom sollte laminar sein. Laminare Strömung ist nötig, damit das Schutzgas ohne Vermischung mit Umgebungsluft die Schweißstelle erreichen kann. Anderenfalls besteht die Gefahr, dass das Schutzgas seinen Zweck nicht erfüllt.

Aus den Offenlegungsschriften EP 1 201 346 A1 und US 2002/0134760 A1 sowie der Patentschrift US 5,722,102 und DE 1935178 A1 ist bekannt, den Brenner eines Lichtbogenschweißgeräts mit Elementen auszustatten, die von einem Schutzgas durchströmbar sind und eingesetzt werden, um das Strömungsverhalten zu beeinflussen.

Zur Verbesserung des Strömungsverhaltens des zur Brennerkühlung eingesetzten Mediums aber auch von Schutzgas sind Brenner für Lichtbogenschweißgeräte vorgeschlagen worden, die neben einem Außenrohr zusätzliche Rohre umfassen, die zwischen Außenrohr und Elektrode angeordnet sind und durch das jeweilige Kühlmedium oder ein Schutzgas geleitet werden kann. Durch den Einsatz mehrerer einzelner Rohre kann erreicht werden, dass ein bestimmtes Volumen des Kühlmediums oder des Schutzgases pro Zeiteinheit durch den Brenner geleitet werden kann, ohne dass Verwirbelungen auftreten, die eine laminare Strömung beeinträchtigen, was insbesondere im Fall von Schutzgas von Bedeutung ist. Dagegen kann die Erzeugung einer Strömung durch einen einzelnen Körper mit einem der Summe der Querschnitte der einzelnen Rohre entsprechenden durchströmbaren Querschnitt und entsprechender Länge den Nachteil haben, dass schon bei geringeren Strömungsgeschwindigkeiten Verwirbelungen auftreten können.

Ein Nachteil von Brennern von Lichtbogenschweißgeräten gemäß des Standes der Technik ist, dass ihre Kühlung nicht ausreichend ist und daher die Nachteile der Erwärmung des Brenners, wenn auch möglicherweise in gemindertem Umfang, bestehen bleiben. Zudem ist durch die konstruktive Umsetzung der Brennerkühlung häufig ein Anstieg der Herstellungskosten des Brenners zu verzeichnen. Außerdem stellt sich nicht immer das gewünschte Strömungsverhalten des Kühlmediums oder des Schutzgases ein.

Daher ist eine der Erfindung zugrundeliegende Aufgabe, einen Brenner für ein Lichtbogenschweißgerät der eingangs genannten Art dahingehend weiterzuentwickeln, dass der Kühleffekt verstärkt und das Strömungsverhalten verbessert wird, wobei diese Vorteile durch eine einfache konstruktive Umsetzung realisierbar sind.

Diese Aufgabe wird erfindungsgemäß bei einem Brenner für ein Lichtbogenschweißgerät eingangs genannter Art dadurch gelöst, dass zwischen dem Raum zur Aufnahme der Elektrode und dem Außenrohr ein aus einem offenzelligen Metallschaum ausgebildetes Durchströmungselement angeordnet ist.

Schäume können eine Struktur aufweisen, die von einer Vielzahl von sogenannten Zellen oder Poren geprägt ist.-Diese Hohlräume sind von Wänden, die aus dem jeweiligen Material bestehen, begrenzt. Durchströmbarkeit kann insbesondere erreicht werden, indem ein Durchströmungselement aus einem Schaum eingesetzt wird, der eine offenzellige Struktur besitzt. Eine solche Struktur kann sich dadurch auszeichnen, dass die Hohlräume nicht vollständig von Wänden umschlossen sind. Dann besteht die Möglichkeit, dass ein Medium von einer Zelle in eine angrenzende Zelle strömen kann und so das Durchströmungselement passieren kann.

Es werden keinerlei Beschränkungen bezüglich des Mediums gemacht, für das das Durchströmungselement ausgelegt ist. So sehen Ausführungsformen der Erfindung vor, dass das Durchströmungselement für das Durchströmtwerden von einer Flüssigkeit, wie beispielsweise Wasser oder eines speziellen Kühlmittels, ausgelegt ist. Andere Ausführungsformen beinhalten die Auslegung des Durchströmungselementes für Gase. An dieser Stelle sei angemerkt, dass nicht notwendigerweise die Durchströmbarkeit des Durchströmungselementes ausschließlich für Gase oder für Flüssigkeiten gegeben sein muss. Stattdessen kann das Durchströmungselement sowohl für Gase als auch für Flüssigkeiten ausgelegt sein.

Das Strömungsverhalten eines Mediums kann von den Materialeigenschaften des Durchströmungselementes, d.h. von den Materialeigenschaften des offenzelligen Schaums, aus dem es ausgebildet ist, beeinflusst werden. Exemplarisch sei hier die Struktur des Schaums genannt, die Parameter, wie unter anderem die durchschnittliche Größe und Dichte der Hohlräume oder Zellen, umfasst. Es existieren Verfahren, die es erlauben, Schäume mit einer wunschgemäßen Struktur herzustellen. So können aufgrund neuer technischer Fortschritte beispielsweise metallische Schäume hergestellt werden, indem eine vorher angefertigte Form mit dem verflüssigten Metall ausgegossen wird. Die Form kann dann die Struktur des abgekühlten und ausgehärteten Metallschaums vorgeben. Mit diesem Herstellungsverfahren sind Durchströmungselemente realisierbar, die an verschiedenen Stellen unterschiedliche Eigenschaften haben. Beispielsweise kann die Porendichte im Zentrum eines Durchströmungselementes höher sein als in Randabschnitten.

Ein Vorteil von Ausführungsformen des erfindungsgemäßen Brenners für ein Lichtbogenschweißgerät kann sein, dass durch die Anordnung des aus einem offenzelligen Schaum ausgebildeten Durchströmungselementes zwischen dem Außenrohr des Brenners und der innerhalb des Außenrohrs vorgesehenen Elektrode die Möglichkeit einer verbesserten Brennerkühlung geschaffen wird. Da das Durchströmungselement aus einem Schaum ausgebildet ist, kann sich aufgrund der speziellen, eine Vielzahl von Zellen umfassenden Struktur des Schaums eine gegenüber anderen Materialstrukturen deutlich gesteigerte Oberfläche des Durchströmungselementes ergeben. Diese wiederum kann einen besonders effizienten Wärmeaustausch zwischen dem Durchströmungselement und dem durch es hindurch strömenden Medium erlauben. Somit kann Wärme deutlich besser abtransportiert werden und die Erwärmung des Brenners beim Schweißen abgemildert werden.

Verschiedenen Problemen kann dadurch entgegengewirkt werden. So wird bei einigen Ausführungsformen der vorliegenden Erfindung verhindert, dass sich der Brenner so stark erwärmt, dass auch die Teile, mit denen ein Bediener bei der Arbeit mit einem Schweißgerät, das mit einem erfindungsgemäßen Brenner ausgestattet ist, in Berührung kommt, wie beispielsweise einem Handgriff, in einem Maß erwärmt werden, das ein fortgesetztes Arbeit mit dem Brenner entweder nicht erlaubt oder zumindest unangenehm für den Bediener macht. Es ist jedoch zu beachten, dass die vorliegende Erfindung nicht nur bei handgeführten Brennern zum Einsatz kommen kann, sondern unter anderem auch bei Schweißrobotern Verwendung finden kann.

Des Weiteren kann durch die Reduzierung der Brennererwärmung der Verschleiß vermindert werden. Verbesserte Verfügbarkeit und geringer Wartungsaufwand können die Folge sein.

Schäume können gegenüber anderen Materialstrukturen eine erheblich reduzierte Dichte aufweisen. Dies führt dazu, dass sie bei gleichem Volumen ein deutlich geringeres Gewicht aufweisen. Dementsprechend kann die Erfindung einen Brenner für ein Lichtbogenschweißgerät zur Verfügung stellen, der nicht nur den Vorteil verbesserter Kühlung, sondern gleichzeitig auch eine geringeres Gewicht aufweisen kann. Die Belastung des Bedieners bei der Führung des Brenners wird dadurch gemindert und eine exakte Brennerführung erleichtert, so dass sich positive Auswirkungen auf die Qualität der Schweißnaht einstellen können. Bei Schweißrobotern kann sich das verringerte Gewicht dadurch auswirken, dass eine verminderte mechanische Belastung der den Brenner tragenden Konstruktion, insbesondere der Achsen des Roboters, auftritt. Durch an die geringere Belastung angepasste Auslegung der Kinematik des Roboters kann ein entsprechender, für dieselbe Anwendung geeigneter Roboter kompakter ausgestaltet sein. Durch Materialeinsparung oder den Einsatz von Werkstoffen niedrigerer mechanischer Belastbarkeit können die Fertigungskosten reduziert werden. Zudem kann das verminderte Gewicht des Roboters ein schnelleres Anfahren einer Zielposition erlauben.

Ausführungsformen des Durchströmungselements können einen Effekt auf das Strömungsverhalten des durchströmenden Mediums haben, der sich mit dem vieler einzelner Rohre, die vom Medium durchströmt werden, vergleichbar ist. Dazu kann eine Mehrzahl aneinandergrenzender Zellen des Schaums als eine Röhre und das gesamte Durchströmungselement als eine Mehrzahl solcher Röhren umfassend betrachtet werden. Darin kann eine Begründung der von dem Durchströmungselement hervorgerufenen laminaren Strömung gesehen werden. Die Notwendigkeit mehrere einzelne Strömungsrohre vorzusehen ist dann möglicherweise nicht gegeben. Die Anzahl der Brennerkomponenten kann somit gesenkt werden, was den Fertigungsaufwand herabsetzen, die Produktionskosten mindern und durch die reduzierte Komplexität die Lebensdauer des Brenners verlängern helfen kann. Außerdem kann die Möglichkeit zu einer kompakteren Brennerausgestaltung eröffnet werden.

Bei einem aus einem offenzelligen Schaum ausgebildeten Durchströmungselement kann sich das Strömungsverhalten des durchströmenden Mediums durch eine besonders gleichmäßige Strömungsverteilung über den Querschnitt des Durchströmungselementes auszeichnen. Darüber hinaus können Querkomponenten der Strömung, also solche Komponenten die nicht in der gewünschten Strömungsrichtung verlaufen, abgebaut werden. Gegebenenfalls kann daher auf zusätzliche Strömungsgleichrichter und Elemente, die zur Vergleichmäßigung der Strömung dienen, verzichtet werden. Eine Verminderung der Materialkosten und des Fertigungsaufwands kann die Folge sein. In Abhängigkeit von der Porendichte besteht zudem die Möglichkeit eines lediglich geringen Druckabfalls des durch das Durchströmungselement strömenden Mediums.

Metallschäume können neben den bereits erläuterten allgemeinen Vorteilen von Schäumen eine hohe Wärmeleitfähigkeit mit sich bringen. Ebenso ist es möglich, Metallschäume mit hoher Porosität, d.h. einem hohen Volumenanteil an Hohlräumen, herzustellen. In einigen Ausführungsformen der Erfindung ist hierdurch die Durchströmbarkeit des Durchströmungselementes in besonderem Maß gegeben. Gleichzeitig können metallische Schäume trotz ihrer geringern Dichte eine ausgeprägte mechanische Festigkeit aufweisen. Einige Durchströmungselemente aus Metallschaum können eingeschmolzen und somit recycelt werden.

Gemäß einer Ausführungsform der Erfindung ist das Durchströmungselement im Strömungspfad eines Schutzgases angeordnet. Da das Durchströmungselement eine gute Brennerkühlung mittels eines durch es hindurchströmenden Gases ermöglichen kann und dabei eine gleichmäßige und laminare Gasströmung erlaubt, kann das Schutzgas gleichzeitig als Kühlmedium dienen, denn es werden die hohen Anforderungen erfüllt, die beim Schweißen an das Strömungsverhalten des Schutzgases gestellt werden. Separate Kühlmittel- und Schutzgasversorgung des Brenners können unnötig werden.

Das Durchströmungselement kann dann eine Doppelfunktion wahrnehmen, indem es auf der einen Seite für eine verbesserte Brennerkühlung sorgt und auf der anderen Seite das Strömungsverhalten des Schutzgases an die diesbezüglichen Anforderungen anpasst. Diese Doppelfunktion des Durchströmungselementes kann bewirken, dass gegenüber Brennern des Standes der Technik Komponenten eingespart werden können. So kann zum Beispiel ein zusätzlicher Diffusor oder eine Querbohrung entfallen. Als ein weiterer Vorteil können durch die Lenkung des Schutzgasstromes Gasverluste verringert werden. Strömt das Schutzgas laminar und zielgerichtet auf die Schweißstelle, kann ein geringerer Teil des Schutzgases an ungewünschte Orts strömen. Insbesondere kann eine Gasströmung von einer Brennerdüse zurück in den Brennerhals und zur Schutzgasversorgung bei einigen exemplarischen Ausführungsformen der Erfindung unterdrückt werden.

Selbst wenn zur Kühlung nicht oder nicht nur das Schutzgas dient, zum Beispiel weil eine zusätzliche Wasserkühlung vorgesehen ist, kann das Durchströmungselement gemäß einer Variante der vorliegenden Erfindung den Vorteil einer positiven Beeinflussung des Strömungsverhaltens des Schutzgase aufweisen.

Erfindungsgemäß ist das Durchströmungselement-zwischen einem Raum zur Aufnahme der Elektrode und einem Außenrohr angeordnet. Das bedeutet nicht, dass keine weiteren Brennerkomponenten zwischen dem Raum zur Aufnahme der Elektrode und Außenrohr vorhanden sein dürfen.

Gemäß einer exemplarischen Ausführungsform der Erfindung ist der Raum zur Aufnahme der Elektrode von einem Innenrohr begrenzt. Wird ein Innenrohr zur Verfügung gestellt, kann dies verschiedene Vorteile haben. Als einer dieser Vorteile ist zu nennen, dass beispielsweise beim MIG-Schweißen oder beim MAG-Schweißen die Drahtelektrode einen zusätzlichen Schutz vor Beschädigung durch Abknicken der Drahtelektrode oder dergleichen erhalten kann. Für den Fall eines aus elektrisch leitfähigem Schaum ausgebildeten Durchströmungselementes kann eine verbesserte Isolierung des Durchströmungselementes gegenüber der Elektrode durch das Innenrohr ein zusätzlicher Effekt sein. Ist das Durchströmungselement im Strömungspfad eines Schutzgases angeordnet, kann, wie bereits erläutert, ein vorteilhaftes Strömungsverhalten des Schutzgases resultieren. Dies kann auch im Vergleich zum Durchleiten des Schutzgases durch das Innenrohr selbst gelten. Aufgrund der Möglichkeit des verbesserten Wärmeabtransports bei Ausführungsformen eines erfindungsgemäßen Schweißbrenners kann auf ein Innenrohr mit aufwändigem Profil verzichtet werden, da eine vergrößerte Oberfläche des Innenrohrs, zum Beispiel durch auf der Innenrohroberfläche ausgebildete Rippen, zwecks verbesserten Wärmeaustausches mit einem zur Kühlung eingesetzten Medium überflüssig sein kann. Ein Innenrohr mit rundem oder ovalem Querschnitt kann ausreichen. Die Fertigungskosten können somit reduziert werden.

Weitere Varianten der vorliegenden Erfindung umfassen, dass das Durchströmungselement das Innenrohr berührt. Damit kann ein verbesserter Wärmeaustausch zwischen Durchströmungselement und Innenrohr erzielbar sein. Zudem ist so die Möglichkeit zum Abführen von Wärme nahe der Elektrode, einer bedeutenden Wärmequelle, möglich.

Exemplarische Ausführungsformen der Erfindung sehen vor, dass das Durchströmungselement mit dem Innenrohr verbunden ist. So kann beispielsweise eine stoffschlüssige Verbindung von Innenrohr und Durchströmungselement durch Schweißen, Kleben, Löten oder andere Verfahren hergestellt werden. Auf diese Weise kann sichergestellt werden, dass keine Verschiebung des Durchströmungselementes gegenüber dem Innenrohr stattfindet. Ansonsten könnte der optimale Wärmeaustausch zwischen Innenrohr und Durchströmungselement gefährdet sein.

Gemäß einer Ausführungsform der Erfindung ist zwischen Durchströmungselement und Außenrohr ein Isolationselement angeordnet. Das Isolationselement kann beispielsweise neben der Kühlung durch Gas oder eine Kühlflüssigkeit durch seine Isolationseigenschaften mit dafür sorgen, dass sich das Außenrohr und gegebenenfalls der Brennergriff nicht übermäßig erwärmen und damit eine Nutzungsunterbrechung erforderlich machen.

Denkbar ist auch, dass Ausführungsformen eines erfindungsgemäßen Brenners für ein Lichtbogenschweißgerät mehrere aus einem offenzelligen Schaum ausgebildete Durchströmungselemente enthalten. So können Durchströmungselemente mit unterschiedlichen Materialeigenschaften an verschiedenen Positionen zwischen der Elektrode und dem Außenrohr des Brenners angeordnet sein, um eine optimale Lenkung beispielsweise einer Schutzgas- oder Kühlflüssigkeitsströmung zu erzielen. Ebenso können separate Durchströmungselemente für ein Kühlmedium und für ein Schutzgas vorhanden sein. Das heißt, das Durchströmungselement kann im Strömungspfad einer Kühlflüssigkeit angeordnet sein. Für das Kühlmedium, beispielsweise Kühlwasser, kann ein geschlossener Kühlkreislauf vorgesehen sein.

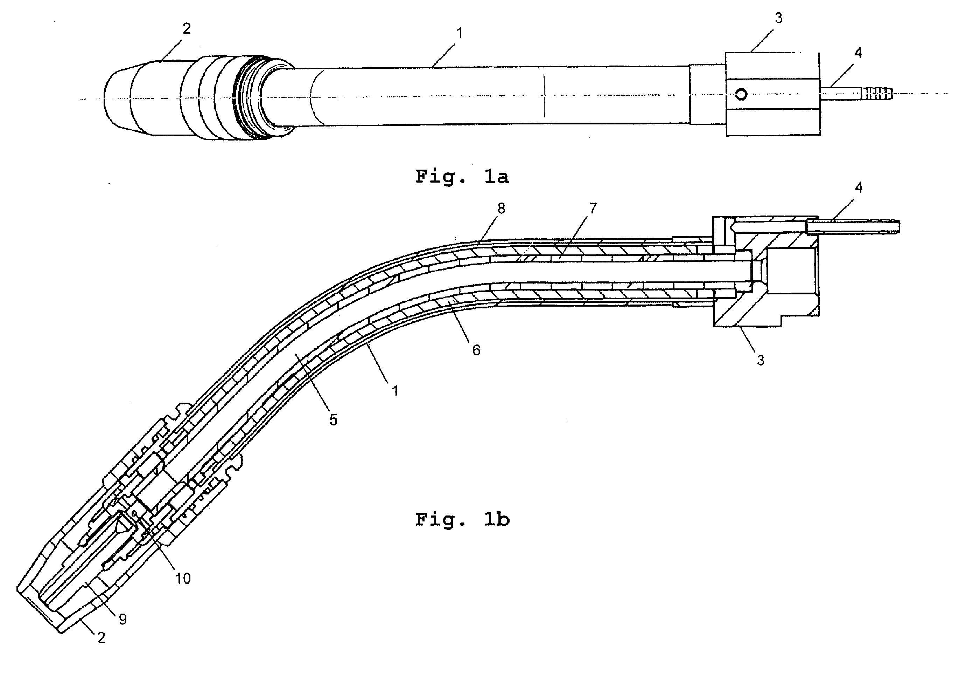

Die Erfindung wird im Folgenden anhand zweier ein Ausführungsbeispiel darstellender Zeichnungen näher erläutert:
Dabei zeigen
Fig. 1a eine schematische Darstellung eines exemplarischen Ausführungsbeispiels eines erfindungsgemäßen Brenners für ein MSG-Schweißgerät;
Fig. 1b einen Schnitt durch das Ausführungsbeispiel eines erfindungsgemäßen MSG-Schweißgeräts aus Fig. la.

Gemäß Fig. 1a umfasst der Brennerhals des exemplarischen Ausführungsbeispiels eines erfindungsgemäßen Brenners für ein MSG-Schweißgerät ein Außenrohr 1. Des Weiteren ist der Brenner mit einer Gasdüse 2 und einem Anschlussstück 3, das mit einem Brennergriff (nicht gezeigt) verbindbar ist, versehen. Zudem verfügt der Brenner über eine Schutzgaszuleitung 4.

Fig. 1b zeigt einen Schnitt durch das exemplarische Ausführungsbeispiel des erfindungsgemäßen Brenners für ein MSG-Schweißgerät. Neben Außenrohr 1, Gasdüse 2, Anschlussstück 3 und Schutzgaszuleitung 4 ist in dieser Darstellung auch der innerhalb des Außenrohrs 1 vorgesehene Raum zur Aufnahme einer Drahtelektrode 5 zu erkennen. Er ist als Raum mit ringförmigem Querschnitt ausgebildet. Zwischen dem Raum zur Aufnahme einer Drähtelektrode 5 und Außenrohr 1 ist ein aus einem offenzelligen Metallschaum ausgebildetes Durchströmungselement 6 so angeordnet, dass es für den Fall der Zuführung von Schutzgas über die Schutzgaszuleitung 4 im Strömungspfad des Schutzgases liegt. Der Raum zur Aufnahme der Drahtelektrode 5 ist von einem Innenrohr 7 begrenzt. Das Durchströmungselement 6 ist derart dimensioniert, dass es das Innenrohr 7 berührt. Zwischen Innenrohr 7 und Außenrohr 1, und damit auch zwischen Durchströmungselement 6 und Außenrohr 1, ist ein Isolierschlauch 8 angeordnet. Über eine Stromkontaktdüse 9 kann die Drahtelektrode 5 mit elektrischer Energie beaufschlagt werden. Zudem ist eine Düsenbohrung 10 vorgesehen.

Der Kanal in der Stromkontaktdüse 9, durch den die Drahtelektrode geführt werden kann, kann ebenfalls als ein Raum zur Aufnahme der Drahtelektrode aufgefasst werden. Entsprechend kann die Gasdüse 2 als ein Außenrohr verstanden werden. Es wird deutlich, dass die vorliegende Erfindung auch Ausführungsbeispiele umfasst, bei denen ein aus einem offenzelligen Schaum ausgebildetes Durchströmungselement zwischen Gasdüse 2 und Stromkontaktrohr 9 angeordnet ist.

Das Außenrohr 1 besteht in dieser beispielhaften Ausführungsform aus Messing. Als Material für das Innenrohr 7 wird Kupfer (Cu-ETP) eingesetzt. Kupfer (Cu-ETP) kann ebenfalls das Ausgangsmaterial für den Metallschaum sein, aus dem das Durchströmungselement 6 ausgebildet ist. Zur Herstellung des Metallschaums kommen pulvermetallurgische Verfahren in Frage. Der Isolierschlauch 8 kann aus Polytetrafluorethylen (PTFE) gefertigt sein. Alternativ kann ein Glasseidenschlauch eingesetzt werden. Andere gut isolierende und hitzebeständige Materialien kommen ebenfalls in Frage.

Einige der möglichen Vorteile der vorliegenden Erfindung werden im Folgenden anhand des hier diskutierten exemplarischen Ausführungsbeispiels erläutert.

Wird über die Stromkontaktdüse 9 eine Drahtelektrode (nicht gezeigt) zum Schweißen mit elektrischer Energie beaufschlagt, fließt ein hoher Strom durch die Drahtelektrode und es wird ein Lichtbogen zwischen der Drahtelektrode und dem zu bearbeitenden Werkstück gezündet. Durch die Hitzeabstrahlung des Lichtbogens und durch die ohmsche Belastung der Drahtelektrode erwärmt sich der Brenner. Dadurch kann nicht nur die Beanspruchung der Brennerkomponenten und damit ihr Verschleiß und Wartungsbedarf steigen, sondern auch der Kontakt eines Bedieners mit dem Brenner zeitweise unangenehm oder gar unmöglich werden. Zudem kann der ohmsche Widerstand der elektrischen Komponenten des Brenners mit Anstieg der Temperatur ebenfall zunehmen, was die Regelung des Schweißstroms verkomplizieren kann.

Über die Schutzgaszuleitung 4 kann dem Brenner Schutzgas zugeführt werden. Eine wichtige Aufgabe des Schutzgases ist es, die Drahtelektrode und das Schweißbad gegen die Atmosphäre abzuschirmen. Erfindungsgemäß kann es jedoch eine Doppelfunktion ausüben, indem es auch zur Brennerkühlung beiträgt, und somit Kosten für zusätzliche Kühleinrichtungen sparen hilft. Wird die Anzahl der benötigten Komponenten für die Brennerkühlung reduziert, kann das eine kompakte Brennergestaltung erlauben. Aufgrund der Ausbildung des Durchströmungselementes 6 aus einem offenzelligen Schaum, kann das Schutzgas durch das Durchströmungselement 6 hindurchströmen. Es strömt nach dem Austritt aus dem Durchströmungselement 6 durch die Schutzgasdüse 2. Mittels der Düsenbohrung 10 wird erreicht, dass das Schutzgas auch entlang des Kanals in der Stromkontaktdüse 9 strömt. Auf diese Weise kann dem Ansaugen von Atmosphäre über die Führung der Drahtelektrode entgegengewirkt werden.

Da es sich bei dem Schaum, aus dem das Durchströmungselement 6 ausgebildet ist, um einen Metallschaum handelt, kann eine gute Wärmeleitfähigkeit des Durchströmungselementes 6 vorliegen. Aufgrund der Tatsache, dass sich Innenrohr 7 und Durchströmungselement 6 großflächig berühren, wird der Wärmeaustausch zwischen dem durch die Abwärme der Drahtelektrode erhitzen Innenrohr 7 und dem Durchströmungselement 6 erleichtert. Innenrohr 7 und Durchströmungselement 6 sind miteinander verbunden, so dass keine Verschiebung des Durchströmungselementes 6 gegenüber dem Innenrohr 7 stattfindet. Die spezielle Struktur des Werkstoffes des Durchströmungselementes 6 verleiht dem Durchströmungselement 6 eine vergleichsweise große Oberfläche. Der Wärmeaustausch zwischen Schutzgas und Durchströmungselement 6 kann daher besonders effektiv erfolgen, was zu einem schnellen Abtransport der Wärme Vorschub leistet und somit eine hervorragende Brennerkühlung erlaubt. Ein Isolationseffekt durch den Isolationsschlauch 8 kann sich zusätzlich positiv bemerkbar machen. Den Nachteilen, die eine übermäßige Brennererwärmung mit sich bringt, kann auf diese Weise entgegenwirkt werden. Das Gewicht des Durchströmungselements 6 kann wegen der geringen Dichte des Schaums, aus dem es ausgebildet ist, ebenfalls gering sein. Eine komfortable und genaue Brennerführung wird somit begünstigt.

Damit das Schutzgas die Aufgabe der Abschirmung der Drahtelektrode und des Schweißbades vor der Atmosphäre optimal erfüllen kann, ist eine laminare Schutzgasströmung notwendig. Die Materialstruktur des Schaums, aus dem das Durchströmungselement 6 ausgebildet ist, kann auch diesbezüglich Vorteile bringen. Die Beschaffenheit des Schaums aus vielen Zellen, die durch dünne Wände voneinander getrennt sind, begünstigt die Ausbildung laminarer Strömungen. Darüber hinaus kann aufgrund der Zellstruktur des Durchströmungselementes 6 eine gleichmäßige Schutzgasströmung über dem Querschnitt des Durchströmungselementes 6 erreicht werden. Zudem können unerwünschte Querkomponenten der Schutzgasströmung unterdrückt werden. Ein Rückfluss des Schutzgases durch den Brennerhals in Richtung der Schutzgaszuleitung 4 kann so unterbunden werden. Die Lenkung des Schutzgasstromes durch das Durchströmungselement 6, kann bewirken, dass es in der beabsichtigten Weise zur Schweißstelle gelangt und Schutzgasverluste minimiert werden. Bedingt durch die hohe Gasdurchlässigkeit des Metallschaums des Durchströmungselementes können diese positiven Effekte bei geringem Druckverlust erzielbar sein.

Die Verbesserung des Strömungsverhaltens des Schutzgases durch das Durchströmungselement 6 kann zusätzliche Brennerkomponenten für die Strömungsoptimierung, wie zum Beispiel einen Diffusor, entbehrlich machen und auch dadurch kompaktere und kostengünstigere Brenner für Lichtbogenschweißgeräte zur Verfügung stellen.

Da das Durchströmungselement 6 eine gute Brennerkühlung mittels eines durch es hindurchströmendes Gases ermöglichen kann und dabei eine gleichmäßige und laminare Gasströmung erlaubt, kann das Schutzgas wie im hier erläuterten Ausführungsbeispiel gleichzeitig als Kühlmedium dienen, denn es werden auch dann die hohen Anforderungen erfüllt, die beim Schweißen an das Strömungsverhalten des Schutzgases gestellt werden. Separate Kühlmittel- und Schutzgasversorgung des Brenners können unnötig werden.

## Patentansprüche

1. Brenner für ein Lichtbogenschweißgerät mit einem Außenrohr (1) und einem innerhalb des Außenrohrs (1) vorgesehenen Raum zur Aufnahme einer Elektrode (5), **dadurch gekennzeichnet, dass** zwischen dem Raum zur Aufnahme der Elektrode (5) und dem Außenrohr (1) ein aus einem offenzelligen Metallschaum ausgebildetes Durchströmungselement (6) angeordnet ist.

2. Brenner nach Anspruch 1, **dadurch gekennzeichnet, dass** das Durchströmungselement (6) im Strömungspfad eines Schutzgases angeordnet ist.

3. Brenner nach Anspruch 1, **dadurch gekennzeichnet, dass** das Durchströmungselement (6) im Strömungspfad einer Kühlflüssigkeit angeordnet ist.

4. Brenner nach einem der vorhergehenden Ansprüche, **dadurch gekennzeichnet, dass** der Raum zur Aufnahme der Elektrode (5) von einem Innenrohr (7) begrenzt ist.

5. Brenner nach Anspruch 4, **dadurch gekennzeichnet, dass** das Durchströmungselement (6) das Innenrohr (7) berührt.

6. Brenner nach einem der Ansprüche 4 oder 5, **dadurch gekennzeichnet, dass** das Durchströmungselement (6) mit dem Innenrohr (7) verbunden ist.

7. Brenner nach einem der vorhergehenden Ansprüche, **dadurch gekennzeichnet, dass** zwischen Durchströmungselement (6) und Außenrohr (1) ein Isolationselement (8) angeordnet ist.

## Claims

1. A torch for an arc welding device comprising an outer tube (1) and a chamber provided within the outer tube (1) for receiving an electrode (5), **characterized in that** between the chamber for receiving the electrode (5) and the outer tube (1), a through-flow element (6) is arranged which is formed from an open-celled metal foam.

2. The torch according to claim 1, **characterized in that** the through-flow element (6) is arranged in the flow path of a shielding gas.

3. The torch according to claim 1, **characterized in that** the through-flow element (6) is arranged in the flow-path of a cooling liquid.

4. The torch according to any one of the preceding claims, **characterized in that** the chamber for receiving the electrode (5) is bordered by an inner tube (7).

5. The torch according to claim 4, **characterized in that** the through-flow (6) contacts the inner tube (7).

6. The torch according to claim 4 or claim 5, **characterized in that** the through-flow element (6) is connected to the inner tube (7).

7. The torch according to any one of the preceding claims, **characterized in that** between through-flow element (6) and outer tube (1), an insulation element (8) is arranged.

## Revendications

1. Chalumeau pour un appareil de soudage à l'arc comprenant un tuyau extérieur (1) et un espace prévu à l'intérieur du tuyau extérieur (1) pour le logement d'une électrode (5), **caractérisé en ce qu'**un élément de passage (6), formé à base d'une mousse de métal à cellules ouvertes, est disposé entre l'espace pour le logement de l'électrode (5) et le tuyau extérieur (1).

2. Chalumeau selon la revendication 1, **caractérisé en ce que** l'élément de passage (6) est disposé dans le chemin d'écoulement d'un gaz protecteur.

3. Chalumeau selon la revendication 1, **caractérisé en ce que** l'élément de passage (6) est disposé dans le chemin d'écoulement d'un liquide de refroidissement.

4. Chalumeau selon l'une quelconque des revendications précédentes, **caractérisé en ce que** l'espace pour le logement de l'électrode (5) est délimité par un tuyau intérieur (7).

5. Chalumeau selon la revendication 4, **caractérisé en ce que** l'élément de passage (6) touche le tuyau intérieur (7).

6. Chalumeau selon l'une quelconque des revendications 4 ou 5, **caractérisé en ce que** l'élément de passage (6) est relié au tuyau intérieur (7).

7. Chalumeau selon l'une quelconque des revendications précédentes, **caractérisé en ce qu'**un élément d'isolation (8) est disposé entre l'élément de passage (6) et le tuyau extérieur (1).
